Europäisches Patentamt

European Patent Office

Office européen des brevets

(11) Veröffentlichungsnummer : **0 087 604**
**B1**

(12) **EUROPÄISCHE PATENTSCHRIFT**

(45) Veröffentlichungstag der Patentschrift :
26.06.85

(21) Anmeldenummer : 83100962.6

(22) Anmeldetag : 02.02.83

(51) Int. Cl.⁴ : **A 61 C 17/02, A 61 H 13/00**

(54) Mundpflege-Einrichtung.

(30) Priorität : 26.02.82 DE 3206843

(43) Veröffentlichungstag der Anmeldung :
07.09.83 Patentblatt 83/36

(45) Bekanntmachung des Hinweises auf die Patenterteilung : 26.06.85 Patentblatt 85/26

(84) Benannte Vertragsstaaten :
AT BE CH DE FR GB IT LI LU NL SE

(56) Entgegenhaltungen :
DE-A- 2 755 975
DE-A- 2 926 309
DE-U- 7 504 719
US-A- 3 405 710

(73) Patentinhaber : Gimelli & Co AG
Eichenweg 2
CH-3052 Zollikofen (CH)

(72) Erfinder : Markau, Dieter
Tavelweg 14
CH-3280 Murten (CH)

(74) Vertreter : Schlagwein, Udo, Dipl.-Ing.
Anwaltsbüro Ruppert & Schlagwein Bahnhofsallee 11
D-6350 Bad Nauheim (DE)

Jouve, 18, rue St-Denis, 75001 Paris, France

**Beschreibung**

Die Erfindung bezieht sich auf eine Mundpflege-Einrichtung mit einer Munddusche, welche eine von einem elektrischen Motor angetriebene Wasserpumpe aufweist. Solche Mundpflege-Einrichtungen sind in letzter Zeit allgemein bekannt geworden und bereits in zahlreichen Haushaltungen vorhanden.

Die bekannten Mundpflege-Einrichtungen benötigen zu ihrem Betrieb einen elektrischen Netzanschluß. Es gibt jedoch Länder, in denen die Installation von Steckern in Badezimmern aus Sicherheitsgründen nicht erlaubt ist. Elektrisch angetriebene Mundduschen können dann nicht im Badezimmer benutzt werden.

Der Erfindung liegt die Aufgabe zugrunde, eine Mundpflege-Einrichtung der eingangs genannten Art zu entwickeln, deren Munddusche keinen elektrischen Netzanschluß am Ort ihres Gebrauchs benötigt.

Diese Aufgabe wird erfindungsgemäß durch die im Anspruch 1 angegebenen Maßnahmen gelöst.

Dank der Erfindung wird es möglich, das separate Bauteil mit dem Motor außerhalb des Badezimmers an das elektrische Netz anzuschließen, so daß in ihm vorhandene Batterien aufgeladen werden. Bei Benutzung der Munddusche nimmt man das separate Bauteil mit, kuppelt den Motor mit der Wasserpumpe und kann dann die Munddusche benutzen. Deshalb benötigt die Munddusche keinen Netzanschluß im Badezimmer. Dadurch wird das bislang bei Mundpflege-Einrichtungen vorhandene Unfallrisiko durch elektrischen Strom vermieden. Gerade im Badezimmer sind elektrische Geräte, in denen Wasser vorhanden und mit relativ hohem Druck gefördert wird im Falle eines Defektes eine erhebliche Gefahrenquelle.

Vorteilhafterweise dient als separates Bauteil eine elektrische Zahnbürste, deren Antriebszapfen in das Kuppelstück einsetzbar ist.

Diese überraschend einfache, erfindungsgemäße Gestaltung hat zahlreiche Vorteile. An erster Stelle ist anzuführen, daß durch die Einsparung des Antriebsaggregates für die Wasserpumpe der Munddusche die Mundpflege-Einrichtung erheblich billiger herstellbar ist, als die bekannten Mundpflege-Einrichtungen, welche jeweils ein Antriebsaggregat für die Zahnbürste und eines für die Munddusche aufweisen. Diese Vereinfachung und Verbilligung der Mundpflege-Einrichtung muß nicht etwa mit funktionellen Nachteilen gegenüber bekannten Mundpflege-Einrichtungen erkauft werden, sondern ganz im Gegenteil, die Einsparung eines Antriebsaggregates führt sogar zu erheblichen Vorteilen. Zunächst ist anzuführen, daß die erfindungsgemäße Mundpflege-Einrichtung nur ein Netzkabel und damit auch nur eine Steckdose benötigt, was oftmals sehr wichtig ist, weil in Badezimmern meist nur eine Steckdose vorhanden ist. In Ländern, in denen aus Sicherheitsgründen Steckdosen in Badezimmern ganz verboten sind, wird es dank der Erfindung möglich, die Ladeeinrichtung für die Zahnbürste außerhalb des Badezimmers die Munddusche jedoch im Badezimmer zu installieren. Ein Benutzer der Mundpflege-Einrichtung kann dann die elektrische Zahnbürste vom Ladegerät mit ins Badezimmer nehmen und in das Kuppelstück einsetzen, um eine funktionstüchtige Munddusche zu erhalten.

Eine vorteilhafte Ausgestaltung der Erfindung ist im Anspruch 3 angegeben. Bei ihr braucht die elektrische Zahnbürste lediglich über Kopf in die Zahnbürstenaufnahme gestellt zu werden, damit ihr Antriebszapfen in das Kuppelstück greift und damit mit der Wasserpumpe gekoppelt ist. Über den ohnehin vorhandenen Schalter der Zahnbürste kann dann die Munddusche eingeschaltet werden.

Durch die im Anspruch 4 angegebene vorteilhafte Ausgestaltung der Erfindung kann die Zahnbürste in eine für ihre Benutzung und Aufladung günstige aufrechte Stellung in der Halterung aufbewahrt werden. Sie braucht bei Benutzung der Munddusche nur aus dieser Halterung entnommen und über Kopf in die daneben angeordnete Zahnbürstenaufnahme gesteckt zu werden. Denkbar wäre es natürlich auch, die Zahnbürstenhalterung so zu gestalten, daß die Zahnbürste in sie sowohl in aufrechter als auch in Über-Kopf-Stellung eingesetzt werden kann. Die aufrechte Stellung kann dann beispielsweise zum Aufladen der Zahnbürste dienen, während in der Über-Kopf-Stellung der Antriebszapfen in das Kuppelstück greift.

Durch die im Anspruch 5 angegebene Ausgestaltung der Erfindung erhält man die Möglichkeit, eine bereits vorhandene elektrische Zahnbürste nachträglich durch eine Munddusche zu ergänzen, so daß ein Mundpflege-Zentrum entsteht, ohne daß ein weiteres Netzkabel erforderlich wird.

Die Erfindung läßt zahlreiche Ausführungsmöglichkeiten zu. Zwei davon sind in der Zeichnung dargestellt und werden nachfolgend beschrieben. Es zeigen:

Figur 1 eine Ansicht von der Seite auf eine erste Ausführungsform der Erfindung,

Figur 2 eine Ansicht von der Seite auf eine zweite Ausführungsform der Erfindung.

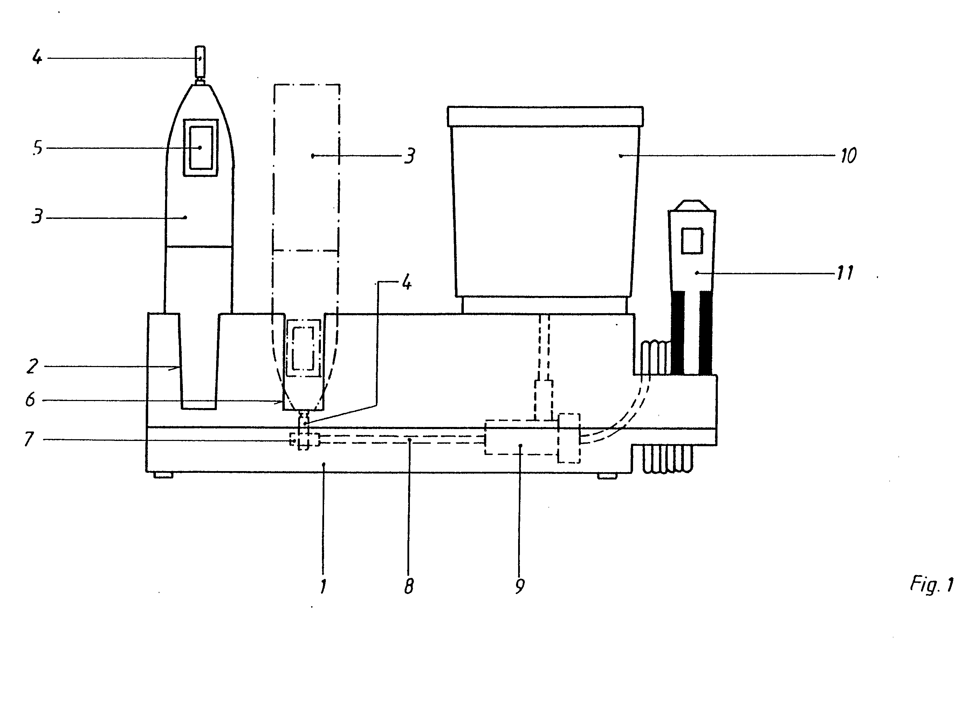

Die Figur 1 zeigt einen Sockel 1 einer Mundpflege-Einrichtung. Dieser Sockel 1 weist in der Zeichnung gesehen nahe der linken Seite eine Halterung 2 auf, in die senkrecht stehend eine elektrische Zahnbürste 3 angeordnet ist. Die Zahnbürste 3 hat einen Antriebszapfen 4, der motorisch angetrieben eine Pendelbewegung auszuführen vermag und auf den nicht dargestellte Borstenträger zur Zahnreinigung aufsteckbar sind. Das Einschalten der Zahnbürste 3 erfolgt über einen Schalter 5 auf der Zahnbürste 3.

Bei der Zahnbürste 3 kann es sich um eine Zahnbürste mit direktem Netzanschluß, mit Stromversorgung über einen Transformator, um eine mit Trockenbatterien betriebene Zahnbürste, aber auch um eine Zahnbürste mit aufladbaren Batterien handeln. Im letzten Fall wäre die Halterung 2 so zu gestalten, daß die Zahnbürste 3 sich selbsttätig auflädt, wenn sie in diese Halterung 2 gesetzt ist.

Neben der Halterung 2 ist im Sockel 1 eine Zahnbürstenaufnahme 6 vorgesehen, in die die Zahnbürste 3 über Kopf eingesetzt werden kann, was gestrichelt dargestellt wurde. Sie ragt dann mit ihrem Antriebszapfen 4 in ein Kuppelstück 7 unterhalb der Zahnbürstenaufnahme 6. Dieses Kuppelstück 7 ist über eine Schubstange 8 mit einer Wasserpumpe 9 im Sockel 1 verbunden. Oberhalb der Wasserpumpe 9 sitzt auf dem Sockel 1 ein Wasserbehälter 10, von dem aus beim Arbeiten der Wasserpumpe 9 Wasser zu einem Handstück 11 strömt und von dort aus einer nicht dargestellten Düse austritt.

Die Gestaltung des Kuppelstückes 7 und der Schubstange 8 hängt von der Art der Zahnbürste 3 und der Wasserpumpe 9 ab. Wenn die Wasserpumpe 9 eine Kolbenpumpe ist und der Antriebszapfen der Zahnbürste 3 bei Betrieb eine Pendelbewegung ausführt, dann braucht das Kuppelstück 7 nur ein Bauteil mit einem Loch zu sein, in das der Antriebszapfen 4 einsteckbar ist. Die Schubstange 8 braucht in einem solchen Fall lediglich die hin- und hergehende Bewegung auf den Kolben der Wasserpumpe 9 zu übertragen. Sofern die Wasserpumpe 9 eine Rotationspumpe ist, muß die hin- und hergehende Bewegung des Antriebszapfens 4 der Zahnbürste 3 natürlich zunächst in eine Drehbewegung umgewandelt werden, was mittels eines Klinksystems erfolgen kann. Bei Verwendung einer Zahnbürste mit rotierender Bürste ist natürlich umgekehrt die Drehbewegung zunächst in eine hin- und hergehende Bewegung umzuwandeln. Bei Zahnbürsten, bei welchen der Antriebszapfen rotiert und sich noch in der Längsrichtung gleichzeitig verschiebt, muß das Kuppelstück ebenfalls verschiebbar ausgestaltet werden, was dem Fachmann jedoch keine Schwierigkeiten bereitet.

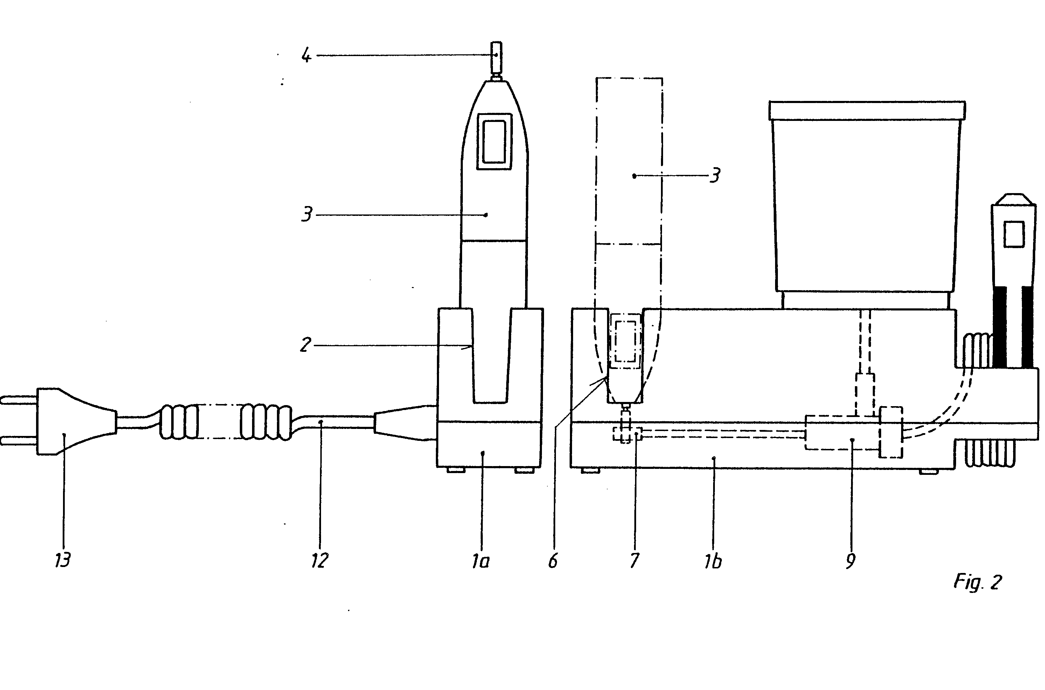

Die Ausführungsform gemäß Figur 2 unterscheidet sich von der nach Figur 1 dadurch, daß die Mundpflege-Einrichtung aus zwei voneinander getrennten Sockeln 1a, 1b besteht.

Im Sockel 1a ist die Halterung 2 für die Zahnbürste 3 vorgesehen. Dieser Sockel 1a hat ein Netzkabel 12 mit einem Stecker 13. Bei dem Sockel 1a mit der Zahnbürste 3 kann es sich um eine völlig übliche Zahnbürsteneinheit handeln.

Der Sockel 1b ist abgesehen davon, daß die Halterung 2 mit der Zahnbürste 3 fehlt, genau wie der Sockel 1 gemäß Figur 1 gestaltet. Es hat wiederum eine Zahnbürstenaufnahme 6, in die die Zahnbürste 3 über Kopf einsetzbar ist, damit sie genau wie bei der Ausführungsform gemäß Figur 1 über das Kuppelstück 7 und der Schubstange 8 mit der Wasserpumpe 9 koppelbar ist.

## Patentansprüche

1. Mundpflege-Einrichtung mit einer Munddusche, welche eine von einem elektrischen Motor angetriebene Wasserpumpe aufweist, dadurch gekennzeichnet, daß der Motor in einem von der Munddusche separaten Bauteil (3) angeordnet und über ein Kuppelstück (7) mit der Wasserpumpe (9) kuppelbar ist.

2. Mundpflege-Einrichtung nach Anspruch 1, dadurch gekennzeichnet, daß als separates Bauteil eine elektrische Zahnbürste (3) dient und das Kuppelstück (7) zur Aufnahme des Antriebszapfens (4) der Zahnbürste (3) ausgebildet ist.

3. Mundpflege-Einrichtung nach Anspruch 2, dadurch gekennzeichnet, daß der Sockel (1) der Mundpflege-Einrichtung eine Zahnbürstenaufnahme (6) zum Einsetzen der Zahnbürste (3) mit ihrem Antriebszapfen nach unten hat und daß das Kuppelstück (7) so unterhalb der Zahnbürstenaufnahme (6) angeordnet ist, daß der Antriebszapfen der Zahnbürste (3) beim Über-Kopf-Einsetzen der Zahnbürste (3) zwangsläufig einkuppelt.

4. Mundpflege-Einrichtung nach Anspruch 3, dadurch gekennzeichnet, daß der Sockel (1) neben der Zahnbürstenaufnahme (6) zum Über-Kopf-Einsetzen der Zahnbürste (3) eine Halterung (2) zum aufrechten Aufbewahren und gegebenenfalls Aufladen der Zahnbürste (3) hat.

5. Mundpflege-Einrichtung nach Anspruch 4, dadurch gekennzeichnet, daß die Halterung (2) zum aufrechten Aufbewahren und gegebenenfalls Aufladen der Zahnbürste (3) in einem separaten Sockel (1a) vorgesehen ist.

## Claims

1. An oral hygiene device, comprising a mouth douche, having a water pump, driven by an electric motor, characterized in that the motor is arranged in a separate unit (3), having a coupling device (7) for linking said unit (3) with the water pump (9).

2. An oral hygiene device as defined in claim 1, characterized in that the separate unit is an electric toothbrush (3) and the coupling device (7) is adopted to receive the drive shaft (4) of said toothbrush (3).

3. An oral hygiene device as defined in claim 2, characterized in that the base (1) of the oral hygiene device has a toothbrush-socket (6) for inserting the toothbrush (3) with its drive shaft (4) in an upside-down position, said coupling device (7) being arranged below said toothbrush-socket (6) in order to operatively link said drive shaft (4), when inserting the toothbrush (3) in an upside-down position.

4. An oral hygiene device as defined in claim 3, characterized in that the base (1) comprises a holder (2) for keeping said toothbrush (3) in an upright position and recharging it if necessary, said holder (2) being arranged beside the toothbrush-socket (6) for inserting the toothbrush (3) in an upside-down position.

5. An oral hygiene device as defined in claim 4, characterized in that the holder (2) for keeping said toothbrush (3) in an upright position and recharging it if necessary is provided in a separate base (1a).

## Revendications

1. Dispositif pour l'hygiène de la bouche avec une douche buccale qui comprend une pompe à eau commandée par un moteur électrique, caractérisé en ce que le moteur est disposé dans un élément (3) séparé de la douche buccale et peut être accouplé au moyen d'une pièce d'accouplement (7) à la pompe à eau (9).

2. Dispositif pour l'hygiène de la bouche selon la revendication 1) caractérisé en ce qu'on se sert en tant qu'élément séparé d'une brosse à dents électrique (3) et la pièce d'accouplement (7) est réalisée pour la réception d'une broche d'entraînement (4) de la brosse à dents (3).

3. Dispositif pour l'hygiène de la bouche selon la revendication 2) caractérisé en ce que le socle (1) du dispositif pour l'hygiène de la bouche comporte un logement (6) pour la brosse à dents pour placer cette brosse à dents (3) avec sa broche d'entraînement vers le bas et la pièce d'accouplement (7) est disposée en dessous du logement de la brosse à dents (6) de manière telle qu'il y a accouplement obligatoire de la broche d'entraînement de la brosse à dents (3) lors de la mise en place de la brosse à dents (3) par la tête.

4. Dispositif pour l'hygiène de la bouche selon la revendication 3) caractérisé en ce que le socle (1) comporte, outre le logement pour la brosse à dents (6) pour la mise en place de la brosse à dents (3) par la tête, un support (2) pour maintenir debout et éventuellement charger la brosse à dents (4).

5. Dispositif pour l'hygiène de la bouche selon la revendication 4) caractérisé en ce que le support (2) pour maintenir debout et éventuellement charger la brosse à dents (3) est prévu dans un socle séparé (1a).

Fig. 1

0 087 604

Fig. 2